# EUROPÄISCHE PATENTSCHRIFT

(11) **EP 2 885 153 B1**
(45) Veröffentlichungstag und Bekanntmachung des Hinweises auf die Patenterteilung: **06.11.2019**
(21) Anmeldenummer: 13745393.2
(22) Anmeldetag: 01.08.2013
(51) Int. Cl.: B60K 37/06, G06F 3/041, G06F 3/0482

(54) **VERFAHREN ZUM BEREITSTELLEN EINER BEDIENVORRICHTUNG IN EINEM FAHRZEUG UND BEDIENVORRICHTUNG FÜR EIN FAHRZEUG**
METHOD FOR PROVIDING AN OPERATING DEVICE IN A VEHICLE AND OPERATING DEVICE FOR A VEHICLE
PROCÉDÉ DE MISE EN PLACE D'UN DISPOSITIF DE RÉGLAGE DANS UN VÉHICULE ET DISPOSITIF DE RÉGLAGE POUR VÉHICULE

(30) Priorität: 15.08.2012 DE 102012016113
(43) Veröffentlichungstag der Anmeldung: 24.06.2015
(73) Patentinhaber: Volkswagen Aktiengesellschaft, 38440 Wolfsburg (DE)
(72) Erfinder: KUHN, Mathias, 14129 Berlin (DE); HAUSCHILD, Frank, 12159 Berlin (DE); DEHMANN, Rainer, 10961 Berlin (DE)
(86) Internationale Anmeldenummer: PCT/EP2013/066192
(87) Internationale Veröffentlichungsnummer: WO 2014/026853

(56) Entgegenhaltungen:
- EP-A2- 2 138 929
- WO-A1-03/036455

## Beschreibung

Die vorliegende Erfindung betrifft ein Verfahren zum Bereitstellen einer Bedienvorrichtung in einem Fahrzeug, bei dem von einer Steuervorrichtung Graphikdaten erzeugt werden, die eine Anzeigefläche so ansteuern, dass eine Liste mit Schaltflächen angezeigt wird und eine Betätigung einer der Schaltflächen erfasst wird. Ferner betrifft die Erfindung eine Bedienvorrichtung für ein Fahrzeug mit einer Anzeigevorrichtung mit einer Anzeigefläche, einer Steuervorrichtung, die mit der Anzeigevorrichtung gekoppelt ist und mittels derer Graphikdaten zum Anzeigen einer Liste mit Schaltflächen erzeugbar sind, und einer Eingabevorrichtung zum Erfassen einer Betätigung einer der Schaltflächen.

Mit der Zunahme elektronischer Einrichtungen im Fahrzeug wurde es erforderlich, eine größere Informationsmenge im Fahrzeug darzustellen. Moderne Fahrzeuge umfassen beispielsweise neben einer Multifunktionsanzeige eine Vielzahl von Fahrerassistenzsystemen, deren Informationen im Fahrzeug angezeigt werden müssen. Des Weiteren umfassen Fahrzeuge häufig ein Navigationssystem. Mittels eines solchen Navigationssystems können digitale geographische Straßenkarten mit einer Route und gegebenenfalls vielfältigen Zusatzinformationen angezeigt werden. Schließlich umfassen moderne Fahrzeuge vielfach Kommunikations- und Multimediaanwendungen, einschließlich einer Mobiltelefonschnittstelle und Einrichtungen zur Wiedergabe von Musik und Sprache. Auch für diese Anwendungen muss in dem Fahrzeug die Möglichkeit bestehen, Informationen anzuzeigen.

Um die vielfältigen Informationen flexibel anzeigen zu können, werden z. B. frei programmierbare Displays eingesetzt, die häufig auch die Wiedergabe herkömmlicher mechanischer Instrumente übernehmen. In der DE 10 2006 032 118 A1 ist beispielsweise ein Kombiinstrument für ein Kraftfahrzeug beschrieben, welches ein Display umfasst, mit dem variabel die Geschwindigkeit des Kraftfahrzeugs, die Drehzahl des Motors des Kraftfahrzeugs, die Temperatur des Motors des Kraftfahrzeugs, die Tankfüllung und/oder die Zeit angezeigt werden können. Außerdem ist es möglich, Informationen eines Navigationssystems, eines Telefons, einer Musikanlage, eines Infotainmentsystems und/oder einer Klimaanlage anzuzeigen.

Zusätzlich zu dem Kombiinstrument wird vielfach eine Anzeigevorrichtung oberhalb der Mittelkonsole des Fahrzeugs angeordnet, über welche weitere Informationen angezeigt werden können. Diese Anzeigevorrichtung wird insbesondere als Multifunktionsanzeige und zur Darstellung einer geographischen Karte eines Navigationssystems verwendet. Eine solche Multifunktionsanzeige ist beispielsweise in der DE 199 41 956 A1 beschrieben.

Aus der DE 10 2008 052 442 A1 ist ein Verfahren und eine Bedieneinrichtung zur Bedienung mehrerer Funktionseinheiten in einem Kraftfahrzeug bekannt, bei denen die Bedienfunktionen menüartig in mehreren Bedienebenen strukturiert sind. Die Bedienfunktion der höchsten Bedienebene wird dabei sprachgesteuert, Bedienfunktionen darunter liegender Bedienebenen werden sprachgesteuert und/oder manuell bedient.

Für die Anzeige von Information in einem Fahrzeug ergeben sich sehr spezielle Anforderungen. Die Informationsaufnahme erfolgt im Fahrzeug unter anderem durch den Fahrer. Die Informationen sollten somit im Fahrzeug so dargestellt werden, dass die Informationsaufnahme durch den Fahrer nicht zu einer Ablenkung während der Fahrt führt. Die dargestellten Informationen sollten daher intuitiv und schnell vom Fahrer erfassbar sein, so dass er für die Informationsaufnahme nur sehr kurzzeitig den Blick vom Fahrgeschehen abwenden muss. Wird die Bedienung der Fahrzeugeinrichtungen von einer Anzeige unterstützt oder geführt, sollte die Anzeige so erfolgen, dass der Fahrer für die Bedienung nur sehr kurz die Anzeige betrachten muss, um die Bedienung durchzuführen.

Der vorliegenden Erfindung liegt die Aufgabe zugrunde, ein Verfahren und eine Bedienvorrichtung der eingangs genannten Art bereitzustellen, welche eine schnelle, intuitive und einfache Bedienung von Fahrzeugeinrichtungen ermöglichen, deren Informationen dargestellt werden.

Erfindungsgemäß wird diese Aufgabe durch ein Verfahren mit den Merkmalen des Anspruchs 1 und eine Bedienvorrichtung mit den Merkmalen des Anspruchs 8 gelöst. Vorteilhafte Ausgestaltungen und Weiterbildungen ergeben sich aus den abhängigen Ansprüchen.

Bei dem erfindungsgemäßen Verfahren werden nach der Erfassung der Betätigung einer Schaltfläche von der Steuervorrichtung Graphikdaten erzeugt, welche die Anzeigefläche so ansteuern, dass bei zumindest einer Schaltfläche ein Anzeigeelement dargestellt wird, welches eine Miniaturdarstellung der Einstellschaltfläche ist, die der Schaltfläche zugeordnet ist, und dass das Anzeigeelement mit der Miniaturdarstellung verschwindet und stattdessen der aktuelle Wert des Parameters angezeigt wird, wenn die Betätigung der Schaltfläche erfasst wurde.

Unter einer *Schaltfläche* wird im Sinne der Erfindung ein Steuerelement einer graphischen Benutzerschnittstelle verstanden. Eine Schaltfläche unterscheidet sich von Elementen und Flächen zur reinen Informationsanzeige, so genannten Anzeigeelementen bzw. Anzeigenflächen, darin, dass sie auswählbar sind. Bei einer Auswahl einer Schaltfläche wird eine ihr zugeordnete Funktion ausgeführt. Die Funktion kann nur zu einer Veränderung der Informationsanzeige führen. Ferner können über die Schaltflächen Einrichtungen gesteuert werden, deren Bedienung von der Informationsanzeige unterstützt wird. Die Schaltflächen können somit herkömmliche mechanische Schalter ersetzen. Die Schaltflächen können beliebig für eine frei programmierbaren Anzeigefläche erzeugt und von dieser angezeigt werden.

Üblicherweise erfolgt die Einstellung von Werten von Parametern von Fahrzeugeinrichtungen dadurch, dass die Schaltfläche einer Liste angewählt wird. Daraufhin erfolgt ein Menüwechsel in eine Darstellung, bei der eine oder mehrere Einstellschaltflächen angezeigt werden. Bei dem erfindungsgemäßen Verfahren erfolgt nach der Betätigung einer der Schaltflächen der Liste vorteilhafterweise kein Menüwechsel. Vielmehr wird eine der Schaltfläche zugeordnete Einstellschaltfläche eingeblendet. Sie fährt beispielsweise aus der Schaltfläche hervor. Nachdem der Wert des Parameters mittels der Einstellschaltfläche eingestellt worden ist, verschwindet die Einstellschaltfläche wieder.

Bei dem erfindungsgemäßen Verfahren wird somit vorteilhafterweise im Vergleich zu herkömmlichen Verfahren ein Menüwechsel eingespart. Hierdurch ergibt sich eine erleichterte Benutzung für den Nutzer, da er eine geringere Komplexität der Bediensystematik wahrnimmt. Die Bedienung ist somit intuitiver, einfacher und schneller durchführbar.

Gemäß einer Ausgestaltung des erfindungsgemäßen Verfahrens verschwindet eine Schaltfläche der Liste und die Einstellschaltfläche erscheint, wenn die Betätigung der Schaltfläche erfasst wurde. Die betätigte Schaltfläche kann insbesondere um die Einstellschaltfläche, welche dieser Schaltfläche zugeordnet ist, vergrößert werden. Beispielsweise kann die betätigte Schaltfläche nach unten, nach oben oder zu einer Seite expandiert werden.

Die Liste mit den Schaltflächen nimmt beispielsweise in Richtung der Listendarstellung den gesamten Anzeigebereich der Anzeigefläche ein, welcher für die Liste reserviert ist. Erfolgt die Expansion der betätigten Schaltfläche auch in Richtung der Listendarstellung, verschwindet die äußerste Schaltfläche in Richtung der Expansion der betätigten Schaltfläche. Bei einer vertikalen Liste kann somit die unterste Schaltfläche der Liste verschwinden, wenn die betätigte Schaltfläche nach unten vergrößert wird, außer wenn die unterste Schaltfläche betätigt wurde. Wenn hingegen die unterste Schaltfläche betätigt wurde und die Vergrößerung dieser Schaltfläche auch nach unten erfolgt, verschwindet die oberste Schaltfläche der Liste. Die Liste kann auf analoge Weise verändert werden, wenn die Schaltfläche nach oben oder zur Seite expandiert wird. Hierdurch erreicht man, dass der Nutzer sich in der listenartigen Bedienstruktur auch dann noch gut orientieren kann, wenn der Wert eines Parameters, welcher einer Schaltfläche zugeordnet ist, eingestellt wird.

Gemäß einer weiteren Ausgestaltung des erfindungsgemäßen Verfahrens wird eine Betätigung der Einstellschaltfläche erfasst, woraufhin von der Steuervorrichtung Graphikdaten erzeugt werden, welche die Anzeigefläche so ansteuern, dass die Einstellschaltfläche automatisch wieder verschwindet. Durch dieses automatische Schließen der Einstellschaltfläche nach dem Einstellen des zugehörigen Wertes, wird ein weiterer Bedienschritt eingespart. Hierdurch lässt sich ein Bedienvorgang schneller durchführen. Dies ist insbesondere bei einem Einsatz des Verfahrens in einem Fahrzeug wichtig, wenn der Bedienvorgang vom Fahrer des Fahrzeugs durchgeführt wird. Somit wird durch das erfindungsgemäße Verfahren letztendlich ein Beitrag zur Sicherheit beim Führen des Fahrzeugs geleistet.

Auf der Anzeigefläche, welche bei dem erfindungsgemäßen Verfahren verwendet wird, kann eine berührungsempfindliche Oberfläche angeordnet sein. Es wird somit ein sogenannter Touchscreen bereitgestellt. In diesem Fall wird die Position eines Betätigungsobjekts auf der berührungsempfindlichen Oberfläche relativ zu den angezeigten Schaltflächen erfasst. In Abhängigkeit von der erfassten Position wird ein Steuersignal für eine Betätigung der Schaltfläche erzeugt und durch das Steuersignal das Erscheinen und Anzeigen der Einstellschaltfläche ausgelöst.

Bei dem Betätigungsobjekt, welches bei dem erfindungsgemäßen Verfahren verwendet wird, kann es sich beispielsweise um die Fingerspitze eines Nutzers oder einen Betätigungsstift handeln.

Gemäß einer weiteren Ausgestaltung des erfindungsgemäßen Verfahrens wird eine Annäherung des Betätigungsobjekts in einem Detektionsbereich vor der Anzeigefläche erfasst. Wenn ein Betätigungsobjekt im Detektionsbereich erfasst wurde, wechselt die Steuervorrichtung von einem Anzeigezustand in einen Bedienzustand.

Wenn im Bedienzustand eine Annäherung des Betätigungsobjekts an eine der Schaltflächen erfasst wird, erfasst die Steuervorrichtung dies als Betätigung dieser Schaltfläche und erzeugt die Graphikdaten, welche die Anzeigefläche so ansteuern, dass die der Schaltfläche zugeordnete Einstellschaltfläche erscheint und angezeigt wird, bevor das Betätigungsobjekt die berührungsempfindliche Oberfläche berührt. Auf diese Weise wird eine noch schnellere Bedienung der Bedienvorrichtung ermöglicht. Der Nutzer kann sich beispielsweise mit der Fingerspitze der Anzeigefläche nähern. Bevor er die berührungsempfindliche Oberfläche der Anzeigefläche berührt, erscheint bereits die Einstellschaltfläche der Schaltfläche der Liste, der sich die Fingerspitze des Nutzers nähert. Der Nutzer kann dann unmittelbar die berührungsempfindliche Oberfläche bei der Einstellschaltfläche berühren und den Wert des zugehörigen Parameters einstellen. Nachdem er die Fingerspitze wieder von der berührungsempfindlichen Anzeigefläche gelöst hat, verschwindet die Einstellschaltfläche automatisch und die Steuervorrichtung verarbeitet den gegebenenfalls neu eingestellten Wert des Parameters.

Die erfindungsgemäße Bedienvorrichtung ist dadurch gekennzeichnet, dass die Steuervorrichtung so ausgebildet ist, dass nach dem Erfassen einer Betätigung der Schaltfläche Graphikdaten erzeugt werden, welche die Anzeigefläche so ansteuern, dass einer der betätigten Schaltfläche zugeordnete Einstellschaltfläche zum Einstellen eines Wertes eines Parameters, welcher der Schaltfläche zugeordnet ist, erscheint und angezeigt wird.

Die erfindungsgemäße Bedienvorrichtung ist insbesondere so ausgebildet, dass bei zumindest einer Schaltfläche ein Anzeigeelement dargestellt wird, welches eine Miniaturdarstellung der Einstellschaltfläche ist, die der Schaltfläche zugeordnet ist, und das Anzeigeelement mit der Miniaturdarstellung verschwindet und stattdessen der aktuelle Wert des Parameters angezeigt wird, wenn die Betätigung der Schaltfläche erfasst wurde.

Gemäß einer Ausgestaltung der erfindungsgemäßen Bedienvorrichtung ist auf der Anzeigefläche eine berührungsempfindliche Oberfläche ausgebildet. In diesem Fall wird die Berührung einer auf der Anzeigefläche angezeigten Schaltfläche erfasst und als Betätigung der Schaltfläche interpretiert.

Des Weiteren wird bei einer Ausgestaltung der erfindungsgemäßen Bedienvorrichtung eine Annäherung des Betätigungsobjekts an die Anzeigefläche erfasst. Die hierfür vorgesehene Annäherungserfassungseinrichtung kann beispielsweise eine Reflektionslichtschranke umfassen, die mindestens ein Leuchtmittel zum Emittieren von elektromagnetischer Detektionsstrahlung in den Detektionsbereich und ein Empfangselement zum Detektieren eines an dem Betätigungsobjekt gestreuten und/oder reflektierten Anteils der Detektionsstrahlung umfassen. Sie kann insbesondere so ausgebildet sein, das Betätigungsobjekt in dem Detektionsbereich anhand der Intensität der empfangenen Detektionsstrahlung zu erkennen. Die Annäherungserfassungseinrichtung kann ferner verschiedene Leuchtmittel für die einzelnen Detektionszonen umfassen, die jeweils elektromagnetische Detektionsstrahlung in die jeweilige Detektionszone emittieren. Ferner kann eine Modulationsvorrichtung zum Modulieren der emittierten Detektionsstrahlung vorgesehen sein, so dass sich die Detektionsstrahlung, die in die einzelnen Detektionszonen emittiert wird, jeweils hinsichtlich ihrer Modulation unterscheidet. In diesem Fall kann die Annäherungserfassungseinrichtung auch eine Analyseeinheit umfassen, die so ausgebildet ist, dass die empfangene reflektierte und/oder gestreute Detektionsstrahlung hinsichtlich ihrer Modulation analysiert werden kann, um zu ermitteln, in welcher Detektionszone die Detektionsstrahlung an einem Betätigungsobjekt gestreut oder reflektiert wurde.

Des Weiteren betrifft die Erfindung ein Fahrzeug mit der erfindungsgemäßen Bedienvorrichtung. Die Anzeigefläche ist in diesem Fall so angeordnet, dass sie gut von dem Fahrer und/oder dem Beifahrer erreicht werden kann. Beispielsweise ist die Anzeigefläche in der Mittelkonsole des Fahrzeugs angeordnet.

Die Erfindung wird nun anhand eines Ausführungsbeispiels mit Bezug zu den Zeichnungen erläutert.
- Figur 1: zeigt schematisch ein Ausführungsbeispiel der erfindungsgemäßen Bedienvorrichtung und die Verbindung dieser Bedienvorrichtung mit anderen Einrichtungen des Fahrzeugs,
- Figur 2: zeigt eine Schnittansicht der Anzeigevorrichtung des Ausführungsbeispiels der erfindungsgemäßen Bedienvorrichtung,
- Figur 3: zeigt ein Fahrzeug mit dem Ausführungsbeispiel der erfindungsgemäßen Bedienvorrichtung.
- Figur 4A: zeigt eine Anzeige auf der Anzeigefläche, welche mittels eines Ausführungsbeispiels des erfindungsgemäßen Verfahrens erzeugt wurde,
- Figur 4B: zeigt die Veränderung der in Figur 4A gezeigten Anzeige nach der Betätigung einer Schaltfläche,
- Figur 5A: zeigt eine weitere Anzeige auf der Anzeigefläche, welche mittels eines Ausführungsbeispiels des erfindungsgemäßen Verfahrens erzeugt wurde,
- Figur 5B: zeigt die Veränderung der in Figur 5A gezeigten Anzeige nach der Betätigung einer Schaltfläche,
- Figur 6A: zeigt eine weitere Anzeige auf der Anzeigefläche, welche mittels eines Ausführungsbeispiels des erfindungsgemäßen Verfahrens erzeugt wurde, und
- Figur 6B: zeigt die Veränderung der in Figur 6A gezeigten Anzeige nach der Betätigung einer Schaltfläche.

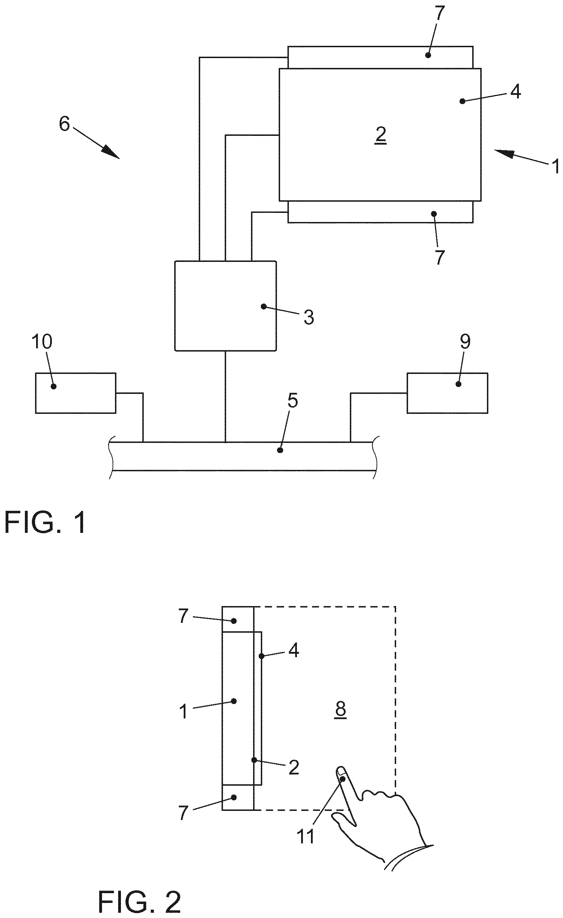

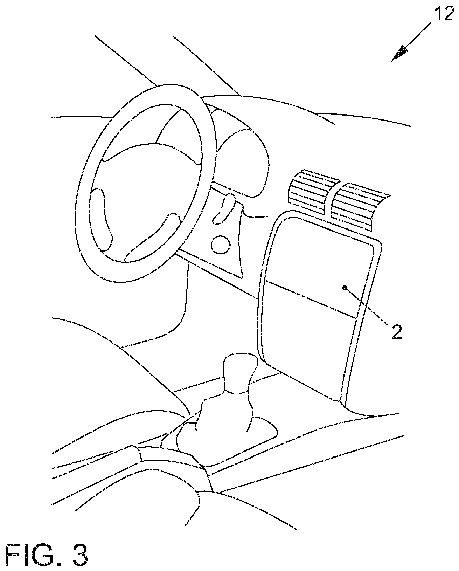

Mit Bezug zu den Figuren 1 bis 3 wird zunächst ein Ausführungsbeispiel der erfindungsgemäßen Bedienvorrichtung 6 und dessen Anordnung in einem Fahrzeug 12 erläutert:
Die Bedienvorrichtung 6 umfasst eine Anzeigevorrichtung 1 mit einer Anzeigefläche 2, die so im Innenraum des Fahrzeugs 12 angeordnet ist, dass sie für zumindest einen Fahrzeuginsassen, insbesondere den Fahrer, gut sichtbar ist. Die Anzeigefläche 2 kann von einem Display, insbesondere einem Flüssigkeitskristalldisplay, beliebiger Bauart bereitgestellt werden.

Die Bedienvorrichtung 6 umfasst ferner eine Steuervorrichtung 3 und eine Eingabevorrichtung 4. Die Steuervorrichtung 3 ist mit der Anzeigevorrichtung 1 verbunden, mit welcher Graphikdaten zur Informationsdarstellung auf der Anzeigefläche 2 erzeugbar sind. Die Eingabevorrichtung ist als berührungsempfindliche Oberfläche 4 auf der Anzeigefläche 2 ausgebildet. Es wird somit ein sogenannter Touchscreen bereitgestellt.

Beispielsweise kann eine Folie über der Anzeigefläche 2 angeordnet sein, mit welcher die Position einer Berührung eines Betätigungsobjekts 11 detektiert werden kann. Bei dem Betätigungsobjekt handelt es sich insbesondere um die Fingerspitze 11 eines Nutzers. Die Folie kann z. B. als resistive Touchfolie, kapazitive Touchfolie oder piezoelektrische Folie ausgebildet sein. Ferner kann die Folie so ausgebildet sein, dass ein Wärmestrom, der z. B. von der Fingerspitze 11 eines Nutzers ausgeht, gemessen wird. Aus der zeitlichen Entwicklung der Berührung der Folie lassen sich verschiedene Eingaben gewinnen. Beispielsweise kann im einfachsten Fall das Berühren der Folie bei einer bestimmten Position erfasst und einem auf der Anzeigefläche 2 angezeigten graphischen Objekt zugeordnet werden. Des Weiteren kann die Länge der Berührung bei einer bestimmten Position oder innerhalb eines bestimmten Bereichs erfasst werden. Auf der Anzeigefläche 2 kann eine betätigbare Schaltfläche angezeigt werden.

Des Weiteren umfasst die Bedienvorrichtung 6 eine Annäherungserfassungseinrichtung 7. Mittels der Annäherungserfassungseinrichtung 7 kann ein Betätigungsobjekt 11 in einem Detektionsbereich 8 erfasst werden. Der Detektionsbereich 8 ist in Fig. 2 im Detail dargestellt. Der Detektionsbereich 8 ist so gebildet, dass eine Annäherung eines Betätigungsobjekts 11 an die berührungsempfindliche Oberfläche 4 auf der Anzeigefläche 2 erfasst wird.

In dem hier beschriebenen Ausführungsbeispiel bildet der Detektionsbereich 8 zumindest ein Volumen vor der Bedienoberfläche 4. Es ist insbesondere ein Quader gebildet, der mit seinen Seitenflächen in der Erstreckung, die parallel zu der berührungsempfindlichen Oberfläche 4 verläuft, die berührungsempfindliche Oberfläche 4 vollständig umschließt. In einer Richtung senkrecht zur berührungsempfindlichen Oberfläche 4 reicht der Quader von der berührungsempfindlichen Oberfläche 4 oder unmittelbar vor der berührungsempfindlichen Oberfläche 4 bis zu einem Abstand von z. B. etwa 40 cm. Der Abstand der äußeren Grenze des Detektionsbereichs 8 vor der berührungsempfindlichen Oberfläche 4 wird dabei so gewählt, dass eine Annäherung an die berührungsempfindliche Oberfläche 4 so rechtzeitig detektiert werden kann, dass die Anzeige auf der Anzeigefläche 2 früh genug verändert werden kann, um den Nutzer bei einer Eingabe zu unterstützen. Ferner sollte der Abstand des Detektionsbereichs 8 von der berührungsempfindlichen Oberfläche 4 so gewählt werden, dass das Betätigungsobjekt 11 oder ein anderes Objekt so selten wie möglich in den Detektionsbereich 8 bewegt wird, wenn keine Bedienung der berührungsempfindlichen Oberfläche 4 beabsichtigt ist.

Weitere Details zu verschiedenen Ausbildungen der Annäherungserfassungseinrichtung 7 sind beispielsweise in der WO 2011/051361 A1 beschrieben.

Die Annäherungserfassungseinrichtung 7 überträgt die aktuelle Position eines Betätigungsobjekts 11 im Detektionsbereich 8 fortwährend an die Steuervorrichtung 3. In Abhängigkeit von diesem Signal kann die Steuervorrichtung 3 die Anzeige auf der Anzeigefläche 2 verändern.

Schließlich ist die Steuervorrichtung 3 mit einem Datenbus 5 gekoppelt. Über diesen Datenbus 5 ist die Steuervorrichtung 3 mit weiteren Einrichtungen 9, 10 des Fahrzeugs 12 verbunden, zu denen Informationen auf der Anzeigefläche 2 angezeigt werden sollen und die mittels der Bedienvorrichtung 6 bedient werden sollen. Mittels Bedienvorrichtung 6 und durch das Verfahren können den Fahrzeuginsassen Informationen angezeigt werden. Ferner können die Fahrzeuginsassen mittels der Bedienvorrichtung 6 Einrichtungen 9, 10 des Fahrzeugs 12 bedienen und die Anzeige steuern.

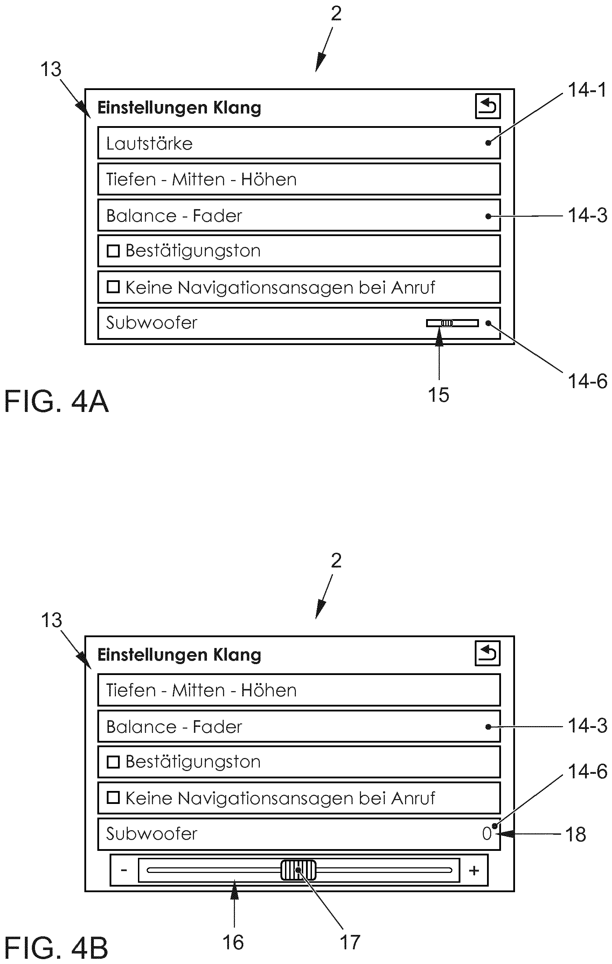

Im Folgenden wird ein Ausführungsbeispiel des erfindungsgemäßen Verfahrens, welches von der vorstehend beschriebenen Bedienvorrichtung 6 ausführbar ist, mit Bezug zu den Figuren 4 bis 6 im Detail erläutert:
Das Ausführungsbeispiel, welches zunächst mit Bezug zu den Figuren 4A und 4B beschrieben wird, betrifft die Einstellungen des Klangs einer Multimediaeinrichtung des Fahrzeugs. Der Nutzer kann auf an sich bekannte Weise in das Menü für die Klangeinstellungen kommen. Bei diesem Menü wird wie in Figur 4A gezeigt eine Liste 13 mit mehreren vertikal übereinander angeordneten Schaltflächen 14-1 bis 14-6 angezeigt. Die Schaltflächen 14-1 bis 14-6 nehmen in vertikaler Richtung die gesamte Anzeigefläche 2 ein. Bei der Schaltfläche 14-6 wird zusätzlich ein Anzeigeelement 15 angezeigt, welches eine Miniaturdarstellung einer Einstellschaltfläche ist, die der Schaltfläche 14-6 zugeordnet ist, wie es später erläutert wird.

Wenn sich der Nutzer nun mit seiner Fingerspitze 11 der berührungsempfindlichen Oberfläche 4 der Anzeigefläche 2 nähert, und schließlich mit der Fingerspitze 11 die berührungsempfindliche Oberfläche 4 bei der Schaltfläche 14-6 berührt, erzeugt die Steuervorrichtung 3 Graphikdaten, welche die Anzeigefläche 2 so ansteuern, dass die in Figur 4B dargestellte Anzeige auf der Anzeigefläche erscheint. Beim Übergang von der in Figur 4A dargestellten Anzeige zu der in Figur 4B dargestellten Anzeige erscheint unterhalb der Schaltfläche 14-6 eine Einstellschaltfläche 16. Im vorliegenden Fall handelt es sich bei der Einstellschaltfläche 16 um einen Schieberegler. Der Nutzer kann einen virtuellen Schieber 17 dadurch nach rechts oder links bewegen, dass er mit der Fingerspitze 11 den Schieber 17 berührt und die Fingerspitze 11 auf der berührungsempfindlichen Oberfläche 4 nach rechts oder links bewegt. Hierdurch kann der Wert eines Parameters eingestellt werden, welcher der Schaltfläche 14-6 zugeordnet ist.

Mit dem Erscheinen der Einstellschaltfläche 16 verschwindet das Anzeigeelement 15 mit der Miniaturdarstellung der Einstellschaltfläche und stattdessen wird ein Anzeigeelement 18 wiedergegeben, welches den aktuellen Wert des Parameters der Einstellschaltfläche 16 digital anzeigt.

Da die Liste 13 die gesamte Anzeigefläche 2 einnimmt, und die Einstellschaltfläche 16 in etwa dieselbe Fläche einnimmt, wie eine der Schaltflächen 14-1 bis 14-6, verschwindet mit dem Erscheinen der Einstellschaltfläche 16 eine andere Schaltfläche. Im vorliegenden Fall ist dies die oberste Schaltfläche 14-1, da durch das Herausfahren der Einstellschaltfläche aus der Schaltfläche 14-6 nach unten, die Liste 13 um eine Schaltfläche nach oben gefahren wird.

Wenn der Nutzer mit seiner Fingerspitze 11 die Einstellschaltfläche 16 betätigt hat und seine Fingerspitze 11 wieder von der berührungsempfindlichen Oberfläche gelöst hat, verschwindet die Einstellschaltfläche 16 automatisch wieder und die Steuervorrichtung 3 erzeugt Graphikdaten, welche die Anzeigefläche 2 so ansteuern, dass die in Fig. 4A wiedergegebene Anzeige wieder angezeigt wird. Ferner verarbeitet die Steuervorrichtung 3 den gegebenenfalls neu eingestellten Wert des Parameters weiter.

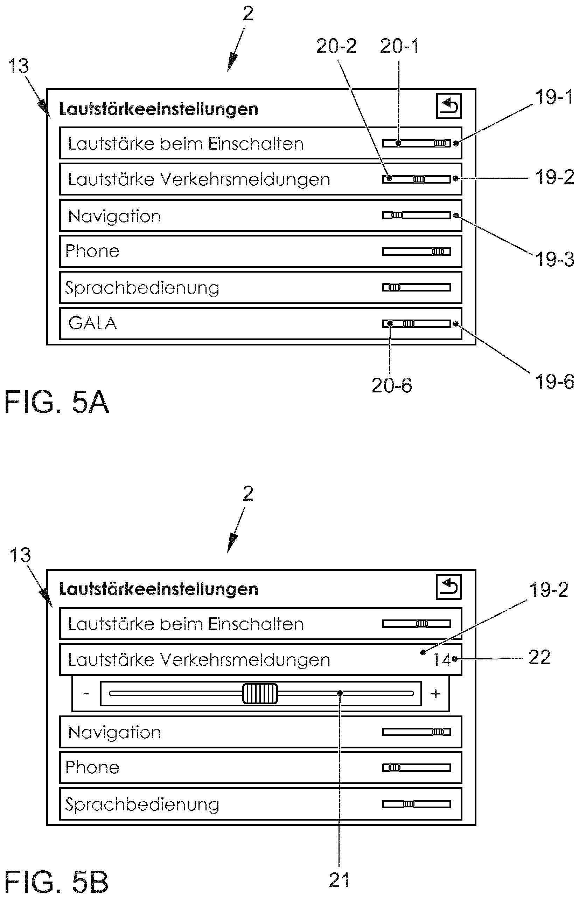

Mit Bezug zu den Figuren 5A und 5B wird ein anderes Beispiel des erfindungsgemäßen Verfahrens erläutert, bei dem Lautstärkeeinstellungen der Multimediaeinrichtung des Fahrzeugs 12 vorgenommen werden. Wie beim vorherigen Beispiel wird eine Liste 13 mit verschiedenen Schaltflächen 19-1 bis 19-6 auf der Anzeigefläche 2 angezeigt. In diesem Fall wird bei jeder Schaltfläche 19-1 bis 19-6 ein Anzeigeelement 20-1 bis 20-6 wiedergegeben, welches eine Miniaturdarstellung der Einstellschaltfläche ist, welche der entsprechenden Schaltfläche 19-1 bis 19-6 zugeordnet ist. In dieser Miniaturdarstellung wird auch der aktuelle Wert des zugehörigen Parameters analog, d. h. durch die Stellung eines Schiebers, visualisiert.

Wenn der Nutzer nun mit seiner Fingerspitze 11 beispielsweise die Schaltfläche 19-2 berührt, erscheint die zugehörige Einstellschaltfläche 21 unterhalb der Schaltfläche 19-2. Auch in diesem Fall handelt es sich um einen Schieberegler. Gleichzeitig verschwindet die Schaltfläche 19-6 aus der Liste 13. Die anderen Schaltflächen 19-1 bis 19-5 werden jedoch weiterhin angezeigt. Ferner verschwindet das Anzeigeelement 20-2. Stattdessen wird das Anzeigeelement 22 dargestellt, welches den aktuellen Wert des Parameters, welcher zu der Schaltfläche 19-2 gehört, digital, d. h. als Zahl, anzeigt.

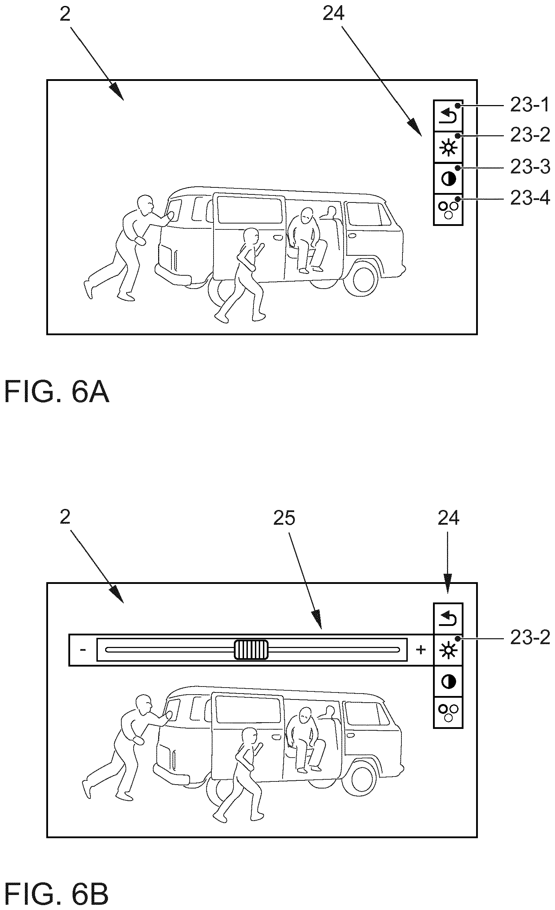

Mit Bezug zu den Figuren 6A und 6B wird eine Variante des erfindungsgemäßen Verfahrens erläutert. In diesem Fall wird beispielsweise auf der Anzeigefläche 2 ein Foto oder ein Video wiedergegeben. Gleichzeitig wird eine Liste 24 mit Schaltflächen 23-1 bis 23-4 angezeigt. Wenn der Nutzer nun mit seiner Fingerspitze 11 die berührungsempfindliche Oberfläche 4 bei der Schaltfläche 23-2 berührt, erscheint wie in Figur 6B gezeigt eine Einstellschaltfläche 25 links neben der Schaltfläche 23-2 zum Einstellen des Wertes des Parameters, welcher der Schaltfläche 23-2 zugeordnet ist. Mittels des Schiebereglers der Einstellschaltfläche 25 kann der Nutzer den Wert des Parameters einstellen. Löst er die Berührung seiner Fingerspitze 11 wieder von der berührungsempfindlichen Oberfläche 4, verschwindet die Einstellschaltfläche 25 automatisch und die Steuervorrichtung setzt die Veränderung des Bildparameters für die Wiedergabe des Fotos bzw. die Videos mit dem veränderten Parameter fort.

Im Folgenden wird ein zweites Ausführungsbeispiel des erfindungsgemäßen Verfahrens erläutert, welches mit der erfindungsgemäßen Bedienvorrichtung 6 ausgeführt werden kann:
In diesem Fall wird von der Annäherungserfassungseinrichtung erfasst, wenn die Fingerspitze 11 des Nutzers in den Detektionsbereich 8 eintritt. Die von der Anzeigefläche 2 wiedergegebene Anzeige wechselt dann von einem Anzeigezustand, bei dem keine Betätigung durch Berühren der berührungsempfindlichen Oberfläche 4 möglich ist, in einen Bedienzustand, bei dem Schaltflächen betätigt werden können. Im Folgenden wird die Position der Fingerspitze 11 des Nutzers im Detektionsbereich 8 erfasst. Wenn die Steuervorrichtung 3 aus der Trajektorie der Fingerspitze 11 im Detektionsbereich 8 ermittelt, dass sich die Fingerspitze 11 einer bestimmten Schaltfläche annähert, interpretiert die Steuervorrichtung 3 dies als Betätigung dieser Schaltfläche bereits bevor der Nutzer die berührungsempfindliche Oberfläche 4 mit einer Fingerspitze 11 berührt hat.

Wie dies vorstehend mit Bezug zu dem ersten Ausführungsbeispiel erläutert wurde, wechselt daraufhin die Anzeige auf der Anzeigefläche 2, so dass die Einstellschaltfläche erscheint und gegebenenfalls eine andere Schaltfläche verschwindet. Der Nutzer kann nun unmittelbar die Einstellschaltfläche ansteuern und durch Berührung der berührungsempfindlichen Oberfläche 4 bei der Einstellschaltfläche den Wert des Parameters einstellen, welcher der Schaltfläche zugeordnet ist, der sich die Fingerspitze 11 des Nutzers angenähert hat. Löst der Nutzer dann seine Fingerspitze 11 wieder von der berührungsempfindlichen Oberfläche 4, verschwindet die Einstellschaltfläche wieder, wie es vorstehend erläutert wurde.

### Bezugszeichenliste

- 1: Anzeigevorrichtung
- 2: Anzeigefläche
- 3: Steuervorrichtung
- 4: berührungsempfindliche Oberfläche, Eingabevorrichtung
- 5: Datenbus
- 6: Bedienvorrichtung
- 7: Annäherungserfassungseinrichtung
- 8: Detektionsbereich
- 9: Einrichtung des Fahrzeugs
- 10: Einrichtung des Fahrzeugs
- 11: Betätigungsobjekt, Fingerspitze
- 12: Fahrzeug
- 13: Liste
- 14-1 - 14-6: Schaltflächen
- 15: Anzeigeelement
- 16: Einstellschaltfläche
- 17: Schieber
- 18: Anzeigeelement
- 19-1 - 19-6: Schaltflächen
- 20-1 - 20-6: Anzeigeelemente
- 21: Einstellschaltfläche
- 22: Anzeigeelement
- 23-1 - 23-4: Schaltflächen
- 24: Liste
- 25: Einstellschaltfläche

## Patentansprüche

1. Verfahren zum Bereitstellen einer Bedienvorrichtung (6) in einem Fahrzeug (12), bei dem
- von einer Steuervorrichtung (3) Graphikdaten erzeugt werden, die eine Anzeigefläche (2) so ansteuern dass eine Liste (13) mit Schaltflächen (14-1 bis 14-6) angezeigt wird, und
- eine Betätigung einer (14-6) der Schaltflächen (14-1 bis 14-6) erfasst wird,
- woraufhin von der Steuervorrichtung (3) Graphikdaten erzeugt werden, welche die Anzeigefläche (2) so ansteuern, dass eine der betätigten Schaltfläche (14-6) zugeordnete Einstellschaltfläche (16) zum Einstellen eines Wertes eines Parameters, welcher der Schaltfläche (14-6) zugeordnet ist, erscheint und angezeigt wird,
**dadurch gekennzeichnet,**
**dass** bei zumindest einer Schaltfläche (14-6) ein Anzeigeelement (15) dargestellt wird, welches eine Miniaturdarstellung der Einstellschaltfläche (16) ist, die der Schaltfläche (14-6) zugeordnet ist, und
**dass** das Anzeigeelement (15) mit der Miniaturdarstellung verschwindet und stattdessen der aktuelle Wert des Parameters angezeigt wird, wenn die Betätigung der Schaltfläche (14-6) erfasst wurde.

2. Verfahren nach Anspruch 1,
**dadurch gekennzeichnet,**
**dass**, wenn die Betätigung der Schaltfläche (14-6) erfasst wurde, eine Schaltfläche (14-1) der Liste (13) verschwindet und die Einstellschaltfläche (16) erscheint.

3. Verfahren nach Anspruch 1 oder 2,
**dadurch gekennzeichnet,**
**dass** eine Betätigung der Einstellschaltfläche (16) erfasst wird, woraufhin von der Steuervorrichtung (3) Graphikdaten erzeugt werden, welche die Anzeigefläche (2) so ansteuern, dass die Einstellschaltfläche (16) automatisch wieder verschwindet.

4. Verfahren nach einem der vorhergehenden Ansprüche,
**dadurch gekennzeichnet,**
**dass** auf der Anzeigefläche (2) eine berührungsempfindliche Oberfläche (4) angeordnet ist.

5. Verfahren nach Anspruch 4,
**dadurch gekennzeichnet,**
**dass** die Position eines Betätigungsobjekts (11) auf der berührungsempfindlichen Oberfläche (4) relativ zu den Schaltflächen (14-1 bis 14-6) erfasst wird, dass in Abhängigkeit von der erfassten Position ein Steuersignal für eine Betätigung der Schaltfläche (14-6) erzeugt wird und durch das Steuersignal das Erscheinen und Anzeigen der Einstellschaltfläche (16) ausgelöst wird.

6. Verfahren nach einem der vorhergehenden Ansprüche,
**dadurch gekennzeichnet,**
**dass** eine Annäherung eines Betätigungsobjekts (11) in einem Detektionsbereich (8) vor der Anzeigefläche (2) erfasst wird und die Steuervorrichtung (3) von einem Anzeigezustand in einen Bedienzustand wechselt, wenn ein Betätigungsobjekt (11) im Detektionsbereich (8) erfasst wurde.

7. Verfahren nach Anspruch 6,
**dadurch gekennzeichnet,**
**dass**, wenn im Bedienzustand eine Annäherung des Betätigungsobjekts (11) an eine der Schaltflächen (14-1 bis 14-6) erfasst wird, die Steuervorrichtung (3) dies als Betätigung dieser Schaltfläche (14-6) erfasst und die Graphikdaten erzeugt, welche die Anzeigefläche (2) so ansteuern, dass die der Schaltfläche (14-6) zugeordnete Einstellschaltfläche (16) erscheint und angezeigt wird, bevor das Betätigungsobjekt (11) die berührungsempfindliche Oberfläche (4) berührt.

8. Bedienvorrichtung (6) für ein Fahrzeug (12) mit
- einer Anzeigevorrichtung (1) mit einer Anzeigefläche (2),
- einer Steuervorrichtung (3), die mit der Anzeigevorrichtung (1) gekoppelt ist und mittels derer Graphikdaten zum Anzeigen einer Liste (13) mit Schaltflächen (14-1 bis 14-6) erzeugbar sind, und
- einer Eingabevorrichtung (4; 7) zum Erfassen einer Betätigung einer der Schaltflächen (14-1 bis 14-6), wobei
- die Steuervorrichtung (3) so ausgebildet ist, dass nach dem Erfassen einer Betätigung der Schaltfläche (14-6) Graphikdaten erzeugt werden, welche die Anzeigefläche (2) so ansteuern, dass eine der betätigten Schaltfläche (14-6) zugeordnete Einstellschaltfläche (16) zum Einstellen eines Wertes eines Parameters, welcher der Schaltfläche (14-6) zugeordnet ist, erscheint und angezeigt wird,
**dadurch gekennzeichnet, dass** die Steuervorrichtung so ausgebildet ist, dass
- bei zumindest einer Schaltfläche (14-6) ein Anzeigeelement (15) dargestellt wird, welches eine Miniaturdarstellung der Einstellschaltfläche (16) ist, die der Schaltfläche (14-6) zugeordnet ist, und
- das Anzeigeelement (15) mit der Miniaturdarstellung verschwindet und stattdessen der aktuelle Wert des Parameters angezeigt wird, wenn die Betätigung der Schaltfläche (14-6) erfasst wurde.

## Claims

1. A method for providing an operating device (6) in a vehicle (12), in which
- graphic data are generated by a control device (3), which graphic data control a display surface (2), such that a list (13) containing buttons (14-1 to 14-6) is displayed, and
- an actuation of one (14-6) of the buttons (14-1 to 14-6) is detected,
- whereupon graphic data are generated by the control device (3), which graphic data control the display surface (2), such that an adjusting button (16) assigned to the actuated button (14-6) appears and is displayed for adjusting a value of a parameter, which is assigned to the button (14-6),
**characterized in**
**that** in the case of at least one button (14-6) a display element (15) is displayed, which is a miniature representation of the adjusting button (16), which is assigned to the button (14-6), and
**that** the display element (15) disappears with the miniature representation and instead the current value of the parameter is displayed, if the actuation of the button (14-6) was detected.

2. The method according to Claim 1,
**characterized in**
**that** if the actuation of the button (14-6) was detected, a button (14-1) of the list (13) disappears the adjusting button (16) appears.

3. The method according to Claim 1 or 2,
**characterized in**
**that** an actuation of the adjusting button (16) is detected, whereupon graphic data are generated by the control device (3), which graphic data control the display surface (2), such that the adjusting button (16) automatically disappears again.

4. The method according to any one of the preceding claims,
**characterized in**
**that** a touch-sensitive surface (4) is arranged on the display surface (2).

5. The method according to Claim 4,
**characterized in**
**that** the position of an actuation object (11) is detected on the touch-sensitive surface (4) relative to the buttons (14-1 to 14-6), that depending on the detected positon a control signal is generated for an actuation of the button (14-6) and the appearance and display of the adjusting button (16) is triggered by the control signal.

6. The method according to any one of the preceding claims,
**characterized in**
**that** an approach of an actuation object (11) is detected in a detection region (8) in front of the display surface (2) and the control device (3) switches from a display state into an operating state, if an actuation object (11) was detected in the detection region (8).

7. The method according to Claim 6,
**characterized in**
**that**, if in the operating state an approach of the actuation object (11) to one of the buttons (14-1 to 14-6) is detected, the control device (3) detects this as actuation of said button (14-6) and generates the graphic data, which control the display surface (2), such that the adjusting button (16) assigned to the button (14-6) appears and is displayed, before the actuation object (11) touches the touch-sensitive surface (4).

8. An operating device (6) for a vehicle (12) having
- a display device (1) with a display surface (2),
- a control device (3), which is coupled with the display device (1) and by means of which graphic data can be generated for displaying a list (13) with buttons (14-1 to 14-6), and
- an input device (4; 7) for detecting an actuation of one of the buttons (14-1 to 14-6), wherein
- the control device (3) is designed, such that after the detection of an actuation of the button (14-6) graphic data are generated, which control the display surface (2), such that an adjusting button (16) assigned to the actuated button (14-6) for adjusting a value of a parameter, which is assigned to the button (14-6), appears and is displayed,
**characterized in that** the control device is designed such that
- in the case of at least one button (14-6) a display element (15) is displayed, which is a miniature representation of the adjusting button (16), which is assigned to the button (14-6), and
- the display element (15) disappears with the miniature representation and instead the current value of the parameter is displayed, if the actuation of the button (14-6) was detected.

## Revendications

1. Procédé de réalisation d'un dispositif de commande (6) dans un véhicule (12), dans lequel
- des données graphiques sont générées par un dispositif de contrôle (3), qui contrôlent une surface d'affichage (2) de façon à ce qu'une liste (13) avec des boutons (14-1 à 14-6) et
- un actionnement d'un (14-6) des boutons (14-1 à 14-6) est détecté,
- des données graphiques sont alors générées par le dispositif de contrôle (3), qui contrôlent la surface d'affichage (2) de façon à ce qu'un des boutons de réglage (16), correspondant au bouton actionné (14-6), pour le réglage d'une valeur d'un paramètre qui correspond au bouton, apparaisse et soit affiché,
**caractérisé en ce que**
dans au moins un bouton (14-6), est représenté un élément d'affichage (15), qui est une représentation miniature du bouton de réglage (16), qui correspondant au bouton (14-6) et
**en ce que** l'élément d'affichage (15) avec la représentation miniature disparaît et, à sa place, la valeur actuelle du paramètre est affichée lorsque l'actionnement du bouton (14-6) a été détecté.

2. Procédé selon la revendication 1
**caractérisé en ce que**
lorsque l'actionnement du bouton (14-6) a été détecté, un bouton (14-1) de la liste (13) disparaît et le bouton de réglage (16) apparaît.

3. Procédé selon la revendication 1 ou 2,
**caractérisé en ce que**
un actionnement du bouton de réglage (16) est détecté, des données graphiques sont générées par le dispositif de contrôle (3), qui contrôlent la surface d'affichage (2) de façon à ce que le bouton de réglage (16) disparaisse à nouveau automatiquement.

4. Procédé selon l'une des revendications précédentes,
**caractérisé en ce que**
sur la surface d'affichage (2) est disposée une surface tactile (4).

5. Procédé selon la revendication 4,
**caractérisé en ce que**
la position d'un objet d'actionnement (11) sur la surface tactile (4) par rapport aux boutons (14-1 à 14-6) est détectée, **en ce que**, en fonction de la position détectée, un signal de contrôle est généré pour un actionnement du bouton (14-6) et le signal de contrôle déclenche l'apparition et l'affichage du bouton de réglage (16).

6. Procédé selon l'une des revendications précédentes,
**caractérisé en ce que**
une approche d'un objet d'actionnement (11) dans une zone de détection (8) devant la surface d'affichage (2) est détectée et le dispositif de contrôle (3) passe d'un état d'affichage dans un état de commande lorsqu'un objet d'actionnement (11) a été détecté dans la zone de détection (8).

7. Procédé selon la revendication 6,
**caractérisé en ce que**
lorsque, dans l'état de commande, une approche de l'objet d'actionnement (11) d'un des boutons (14-1 à 14-6) est détectée, le dispositif de contrôle (3) détecte cela comme un actionnement de ce bouton (14-6) et les données graphiques sont générées, qui contrôlent la surface d'affichage (2) de façon à ce que le bouton de réglage (16) correspondant au bouton (14-6) apparaisse et soit affiché avant que l'objet d'actionnement (11) n'entre en contact avec la surface tactile (4).

8. Dispositif de commande (6) pour un véhicule (12) avec
- un dispositif d'affichage (1) avec une surface d'affichage (2),
- un dispositif de contrôle (3), qui est couplé avec le dispositif d'affichage (1) et au moyen duquel des données graphiques peuvent être générées pour l'affichage d'une liste (13) avec des boutons (14-1 à 14-6) et
- un dispositif d'entrée (4 ; 7) pour la détection d'un actionnement d'un des boutons (14-1 à 14-6),
- le dispositif de contrôle (3) étant conçu de façon à ce que, après la détection d'un actionnement du bouton (14-6), des données graphiques sont générées, qui contrôlent la surface d'affichage (2) de façon à ce qu'un bouton de réglage (16) correspondant au bouton (14-6) actionné, pour le réglage d'une valeur d'un paramètre, qui correspond au bouton (14-6), apparaisse et soit affiché, **caractérisé en ce que** le dispositif de contrôle est conçu de façon à ce que
- dans au moins un bouton (14-6), un élément d'affichage (15) est représenté, qui est une représentation miniature du bouton de réglage (16), qui correspond au bouton (14-6) et
- l'élément d'affichage (15) avec la représentation miniature disparaît et, à sa place, la valeur actuelle du paramètre est affichée lorsque l'actionnement du bouton (14-6) a été détecté.
